(19) Europäisches Patentamt
European Patent Office
Office européen des brevets

(11) **EP 3 105 076 B1**

(12) **EUROPÄISCHE PATENTSCHRIFT**

(45) Veröffentlichungstag und Bekanntmachung des Hinweises auf die Patenterteilung:
**22.09.2021 Patentblatt 2021/38**

(21) Anmeldenummer: **15704762.2**

(22) Anmeldetag: **06.02.2015**

(51) Int Cl.:
**B60K 25/06** (2006.01)

(86) Internationale Anmeldenummer:
**PCT/EP2015/052550**

(87) Internationale Veröffentlichungsnummer:
**WO 2015/121174 (20.08.2015 Gazette 2015/33)**

(54) **VERFAHREN ZUM LEISTUNGSBEDARFSABHÄNGIGEN BETRIEB EINER GENERATOREINHEIT**

METHOD FOR THE POWER REQUIREMENT-DEPENDENT OPERATION OF A GENERATOR UNIT

PROCÉDÉ D'EXPLOITATION D'UN ENSEMBLE GÉNÉRATEUR EN FONCTION DU BESOIN DE PUISSANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.02.2014 DE 102014202449**

(43) Veröffentlichungstag der Anmeldung:
**21.12.2016 Patentblatt 2016/51**

(73) Patentinhaber: **Deere & Company**
**Moline, IL 61265 (US)**

(72) Erfinder:
• **REINARDS, Marco**
**67269 Grünstadt (DE)**
• **BÖHM, Barbara**
**69115 Heidelberg (DE)**
• **FRITZ, Norbert**
**68549 Ilvesheim (DE)**

(74) Vertreter: **Reichert, Christian**
**John Deere GmbH & Co. KG**
**Mannheim Regional Center**
**Global Intellectual Property Services**
**John-Deere-Straße 70**
**68163 Mannheim (DE)**

(56) Entgegenhaltungen:
**EP-A1- 2 305 021    DE-A1-102012 006 731**

**Beschreibung**

Die Erfindung betrifft ein Verfahren zum leistungsbedarfsabhängigen Betrieb einer an ein landwirtschaftliches Arbeitsfahrzeug angebauten Generatoreinheit.

DE 10 2012 006731 A1 zeigt ein Verfahren und eine Bauweise für ein definiertes Nebenverbraucherantriebssystem eines Hybridfahrzeuges mit Zapfwellenzusatzantrieb vorzugsweise für Nutzfahrzeuge und Traktoren. Das System besteht aus einem Elektromotor der als Generator und Anlasser arbeiten kann und weiteren leistungsintensiven Nebenverbrauchern.

Die DE 103 03 050 B4 beschreibt eine Generatoreinheit für ein landwirtschaftliches Arbeitsfahrzeug, die demontierbar mit dem Arbeitsfahrzeug verbunden ist und einen elektrischen Generator mit einem Rotor und einem Stator umfasst. Der Rotor kann zum Antrieb zumindest mittelbar mit der Zapfwelle des Arbeitsfahrzeugs verbunden werden. Hierdurch können elektrische Verbraucher eines an das Arbeitsfahrzeug angehängten Anbaugeräts mit höherer Nennspannung betrieben werden, als von dem Bordnetz des Arbeitsfahrzeugs üblicherweise zur Verfügung gestellt wird.

DE10 2009 043 591 zeigt eine Heuwerbungsmaschine, wobei diese ein frequenzvariables elektrisches Antriebssystem aufweist.

Bei einer derartigen Anordnung ist die Leistungsabgabe des elektrischen Generators proportional zu der Drehzahl, mit der der elektrische Generator angetrieben wird. Diese Generatordrehzahl ist bei einer über die Zapfwelle angetriebener Generatoreinheit proportional zu der Zapfwellendrehzahl und die Zapfwellendrehzahl ist wiederum direkt abhängig von der Drehzahl der Verbrennungskraftmaschine des landwirtschaftlichen Arbeitsfahrzeugs. Letztlich ist die Leistungsabgabe des elektrischen Generators abhängig von der Drehzahl der Verbrennungskraftmaschine beziehungsweise eine Veränderung der Leistungsabgabe des elektrischen Generators kann nur über eine Drehzahländerung der Verbrennungskraftmaschine erreicht werden.

Bei einem elektrischen Verbraucher eines an das Arbeitsfahrzeug angehängten Anbaugeräts entsteht nun während des Betriebes ein Leistungsbedarf, der in Abhängigkeit von der auf das Anbaugerät einwirkenden Last, von Betriebszuständen oder der Größe des Anbaugeräts variieren kann. Damit das Anbaugerät einen optimalen Betrieb gewährleistet, sollte die Generatoreinheit den Leistungsbedarf des Anbaugeräts zu jeder Zeit decken. Zur Deckung des Leistungsbedarfs des Anbaugeräts muss bei der soeben beschriebenen Anordnung die Bedienperson des Arbeitsfahrzeugs die Leistungsabgabe des elektrischen Generators durch die Drehzahl der Verbrennungskraftmaschine kontrollieren und bei Bedarf anpassen. Dies erfordert ein hohes Maß an Aufmerksamkeit durch die Bedienperson. Ist diese nicht gegeben, besteht die Möglichkeit, dass infolge einer zu niedrigen Drehzahl der Verbrennungskraftmaschine die Leistungsabgabe der Generatoreinheit die Leistungsanforderung des Anbaugeräts nicht zu decken vermag oder dass infolge einer hohen Drehzahl der Verbrennungskraftmaschine die Leistungsanforderung des Anbaugeräts zwar gedeckt wird, aber ein unökonomisch hohes Drehzahlniveau anliegt.

Ausgehend hiervon besteht die Aufgabe der vorliegenden Erfindung, die genannten Unzulänglichkeiten zumindest teilweise zu beseitigen.

Die Aufgabe wird gelöst durch ein Verfahren zum leistungsbedarfsabhängigen Betrieb einer an ein landwirtschaftliches Arbeitsfahrzeug angebauten Generatoreinheit, bei dem eine Leistungsabgabe der Generatoreinheit in Abhängigkeit eines ermittelten Leistungsbedarfs eines elektrischen und mit der Leistung der Generatoreinheit gespeisten Verbrauchers eines mit dem landwirtschaftlichen Arbeitsfahrzeug verbundenen Anbaugeräts variiert wird.

Unter einer angebauten Generatoreinheit soll verstanden werden, dass die Generatoreinheit entweder demontierbar an der vorderen oder hinteren Dreipunktaufhängung der Arbeitsmaschine befestigt ist oder fest mit der Arbeitsmaschine an ein Stelle verbunden ist, an der ein Drehbewegung von der Arbeitsmaschine auf die Generatoreinheit übertragen werden kann. Bevorzugt umfasst die Generatoreinheit ein Getriebe und einen mit dem Getriebe in einer Antriebsverbindung stehenden elektrischen Generator. Über das Getriebe kann zwischen der das Getriebe antreibenden Zapfwelle und dem elektrischen Generator ein Übersetzungsverhältnis bereitgestellt werden. Bei dem Anbaugerät kann es sich beispielsweise aber nicht ausschließlich um einen Düngerstreuer, eine Feldspitze oder einen Ladewagen handeln. Weiterhin kann vorgesehen sein, dass der elektrische Verbraucher des Anbaugeräts den Antrieb zum Ausbringen des zu verteilendes Guts bereitstellt, beispielsweise eine elektrisch angetriebene Pumpe, oder einen Antrieb des Anbaugeräts an sich, beispielsweise einen elektrischen Motor an der Antriebsachse, bereitstellt.

Erfindungsgemäß wird ein Verfahren bereitgestellt, durch das bei dem Betrieb eines elektrifizierten Anbaugeräts mittels einer Generatoreinheit, die über die Verbrennungskraftmaschine der Arbeitsmaschine angetrieben werden kann, gewährleistet wird, dass in jedem Betriebszustand dem Anbaugerät eine ausreichende Leistung zur Verfügung gestellt wird, aber gleichzeitig die Leistungsabgabe der Generatoreinheit auf die Leistungsanforderung des Anbaugeräts begrenzt wird.

Gemäß der Erfindung wird die Leistungsabgabe der Generatoreinheit durch Anpassen einer Eingangsdrehzahl der Generatoreinheit variiert. Hierdurch ist es möglich, die Leistungsabgabe der Generatoreinheit durch Anpassung der Drehzahl der Verbrennungskraftmaschine auf die Leistungsanforderung des Anbaugeräts zu begrenzen. Ein ökonomischer Betrieb der Verbrennungskraftmaschine ist somit sichergestellt.

Gemäß der Erfindung wird der Leistungsbedarf durch das Anbaugerät ermittelt. Dies ist vorteilhaft, da somit der Leistungsbedarf an dem Entstehungsort ermittelt wird.

Gemäß der Erfindung wird der ermittelte Leistungsbedarf des Anbaugeräts als Leistungsanforderung zumindest mittelbar an die Generatoreinheit übermittelt. Hierdurch ist gewährleistet, dass die Generatoreinheit einen Vergleich der übermittelten Leistungsanforderung mit der momentanen Leistungsabgabe machen kann.

Bevorzugt wird die Leistungsanforderung mittelbar über das landwirtschaftliche Arbeitsfahrzeug an die Generatoreinheit übermittelt. Somit kann für die Übermittlung die ohnehin bestehende Verbindung über die AEF-Schnittstelle zwischen Anbaugerät und Arbeitsmaschine genutzt werden.

Bevorzugt übermittelt die Generatoreinheit in Abhängigkeit des Leistungsbedarfs des Anbaugeräts eine Drehzahlanforderung an das landwirtschaftliche Arbeitsfahrzeug. Hierdurch ist gewährleistet, dass die Generatoreinheit das verbindende Glied zwischen Anbaugerät und Arbeitsfahrzeug und eine Anpassung der Drehzahl des Arbeitsfahrzeugs verantwortet.

Bevorzugt setzt das landwirtschaftliche Arbeitsfahrzeug die Drehzahlanforderung in eine Anpassung der Motordrehzahl und/oder der Zapfwellendrehzahl um. Hierdurch ist die Bedienperson von einer Korrektur der Motordrehzahl und/oder der Zapfwellendrehzahl entlastet.

Bevorzugt ist eine Steuereinheit vorgesehen, die den Leistungsbedarf des Anbaugeräts, die Leistungsabgabe der Generatoreinheit und die Drehzahl des Motors und/oder der Zapfwelle zu einem Regelkreis verknüpft, in dem eine Regelung dahingehend erfolgt, dass die Leistungsabgabe der Generatoreinheit zumindest annähernd dem Leistungsbedarf des Anbaugeräts entspricht.

Ein bevorzugtes Ausführungsbeispiel der Erfindung wird anhand der nachfolgenden Figuren beschrieben. Hierin zeigen

Figur 1     ein landwirtschaftliches Arbeitsfahrzeug mit gekoppeltem Anbaugerät und Generatoreinheit;

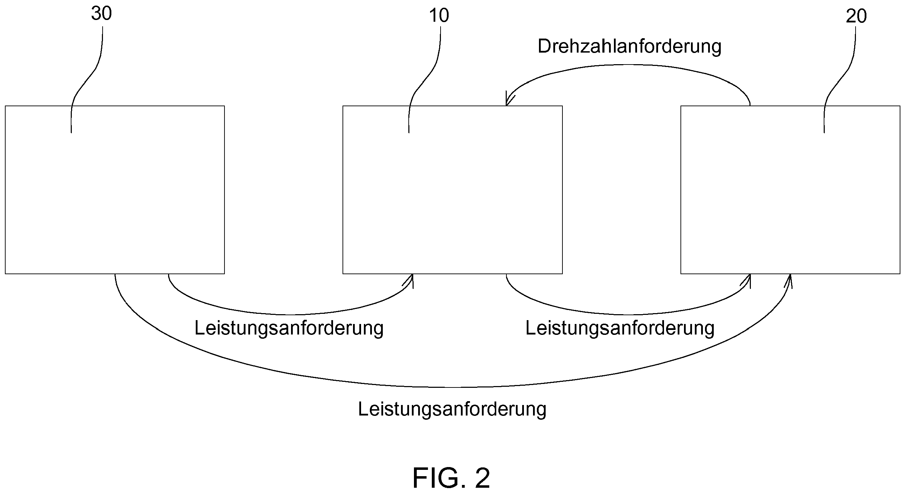

Figur 2     eine schematische Darstellung eines Arbeitsfahrzeug, einer Generatoreinheit und eines Anbaugeräts und eine erfindungsgemäße Kommunikationsstruktur;

Figur 3     zeitliche Verläufe der Leistungsanforderung und des Drehzahlniveaus.

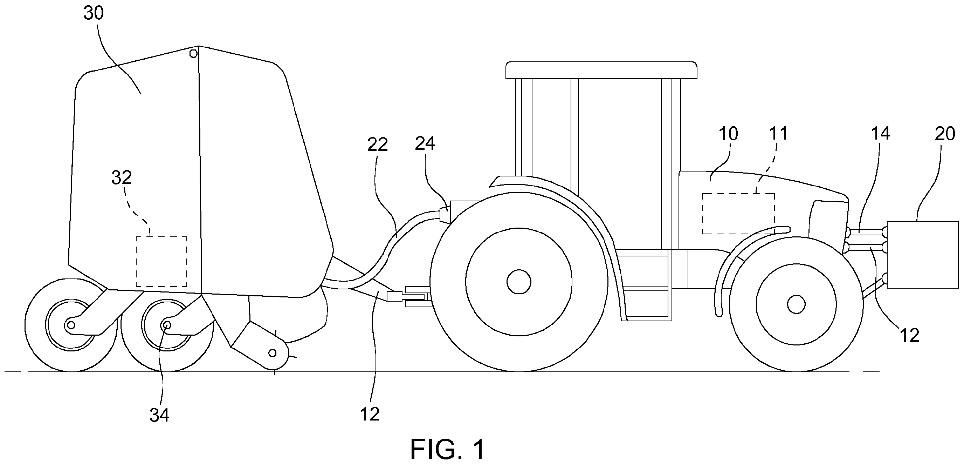

Die Figur 1 zeigt ein landwirtschaftliches Arbeitsfahrzeug 10 in Gestalt eines Schleppers, das über eine gekuppelte Zugdeichsel 12 ein Anbaugerät 30 in Gestalt eines Ladewagens zieht. Das Arbeitsfahrzeug 10 ist von einer Verbrennungskraftmaschine 11 beziehungsweise einem Motor angetrieben. Über eine vordere Dreipunktaufhängung 14 ist eine Generatoreinheit 20 an das Arbeitsfahrzeug 10 angebaut. Die Generatoreinheit 20 ist mit einer vorderen Zapfwelle 16 des Arbeitsfahrzeugs 10 über eine Gelenkwelle 18 verbunden. Die Generatoreinheit 20 kann mittels einer Drehung der Zapfwelle 16 angetrieben werden, um eine elektrische Leistung unabhängig von dem Bordnetz des Arbeitsfahrzeugs 10 zu erzeugen. Das Anbaugerät 30 ist ferner über einen elektrischen Leiter 22 und einen AEF-Verbinder 24 mit dem Arbeitsfahrzeug 10 verbunden. Eine von der Generatoreinheit 20 erzeugte elektrische Leistung kann über nicht näher dargestellte Leitungsmittel auf dem Arbeitsfahrzeug 10 über den AEF-Verbinder 24 und den elektrischen Leiter 22 einem elektrischen Verbraucher 32 des Anbaugeräts 30 zur Verfügung gestellt werden. Vorliegend ist der elektrische Verbraucher 32 als elektrischer Motor zum Antrieb einer Achse 34 des Anbaugeräts 30 ausgeführt.

Es sei darauf hingewiesen, dass es sich bei dem Anbaugerät 30 auch um eine getragene Vorrichtung beispielsweise in Gestalt eines Düngerstreuers handeln kann. Auch muss mit dem elektrischen Verbraucher 32 nicht zwingend eine Achse angetrieben werden. Der Antrieb beispielsweise einer Pumpe kann ebenfalls vorgesehen sein. Ferner kann vorgesehen sein, dass die Generatoreinheit 20 über eine hintere Dreipunktaufhängung angebaut ist und über eine Heckzapfwelle des Arbeitsfahrzeugs 10 angetrieben werden kann. Auf eine Darstellung dieser Alternativen wird verzichtet.

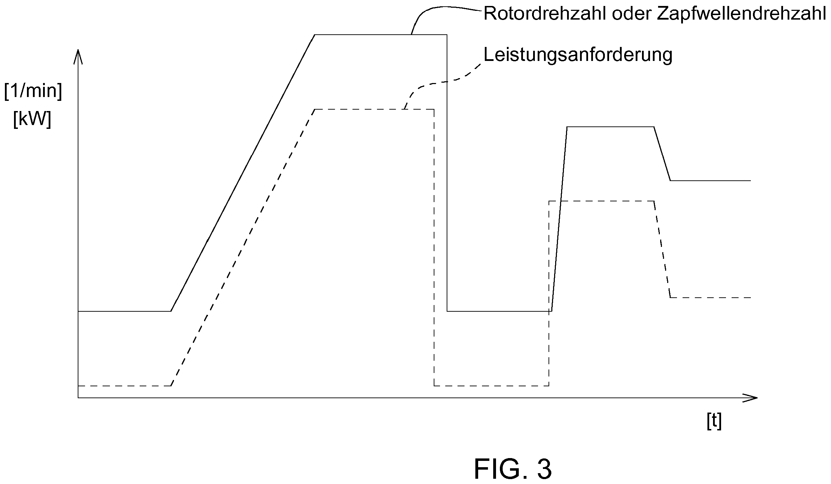

Die Figur 3 zeigt in schematischer Darstellung das Arbeitsfahrzeug 10, die Generatoreinheit 20 und das Anbaugerät 30 und eine erfindungsgemäße Kommunikationsstruktur zwischen diesen. Es wird davon ausgegangen, dass infolge des Betriebszustandes, in dem sich das Anbaugeräts 30 zu einem bestimmten Zeitpunkt befindet, ein definierter elektrischer Leistungsbedarfs besteht. Erfindungsgemäß ist vorgesehen, dass der bestehende Leistungsbedarf als Leistungsanforderung entweder mittelbar über das Arbeitsfahrzeug 10 an die Generatoreinheit 20 oder unmittelbar an die Generatoreinheit 20 übermittelt wird. Nachdem die Generatoreinheit 20 die Leistungsanforderung des Anbaugeräts 30 empfangen hat, vergleicht die Generatoreinheit 20 die Leistungsanforderung mit der momentan zur Verfügung gestellten Leistungsabgabe. In einem einfachsten Fall entsprechen sich Leistungsanforderung und Leistungsabgabe, so dass keine Anpassung der Leistungsabgabe erfolgen muss. Weicht die Leistungsabgabe von der Leistungsanforderung ab, so übermittelt die Generatoreinheit 20 eine Drehzahlanforderung an das Arbeitsfahrzeug 10. Bei der Drehzahlanforderung handelt es sich entweder um eine Anforderung zur Erhöhung der Drehzahl, nämlich wenn die Leistungsabgabe unterhalb der Leistungsanforderung liegt, oder um eine Anforderung zur Verringerung der Drehzahl, nämlich wenn die Leistungsabgabe oberhalb der Leistungsanforderung liegt. Weiterhin kann sich die Drehzahlanforderung auf die Drehzahl der Verbrennungskraftmaschine des Arbeitsfahrzeugs 10 oder die Drehzahlanforderung kann sich auf die Drehzahl der Zapfwelle 16 des Arbeitsfahrzeugs 10 beziehen.

Die Figur 3 zeigt exemplarisch die zeitlichen Verläufe der Leistungsanforderung in der Einheit Kilowatt (kW) des Anbaugeräts 10 und der Motordrehzahl (1/min) oder der Zapfwellendrehzahl (1/min) des Arbeitsfahrzeugs 10. Bei dem Verlauf der Leistungsanforderung des Anbaugeräts 10 wird davon ausgegangen, dass jede Änderung des Kurvenverlaufs durch eine wie auch immer hervorgerufene Änderung eines Betriebszustandes des Anbaugeräts 10 hervorgerufen wird. In der Folge kommt es zu der im Zusammenhang mit der Figur 3 beschriebenen Kommunikation mit einer bedarfsweisen Änderung des Drehzahlniveaus. Zu erkennen ist, dass die jeweilige Änderung des Drehzahlniveaus der Änderung der Leistungsanforderung zeitlich nachfolgt. In einer Formel ausgedrückt, lautet der in Figur 3 dargestellte Zusammenhang

$$f \text{ (Motordrehzahl)} = f \text{ (Leistungsanforderung)},$$

wenn auf die Motordrehzahl geregelt wird oder

$$f \text{ (Zapfwellendrehzahl)} = f \text{ (Leistungsanforderung)},$$

wenn auf die Zapfwellendrehzahl geregelt wird.

Wie in der Figur 1 dargestellt, ist eine Steuereinheit 40 vorgesehen, die den Leistungsbedarf des Anbaugeräts 30, die Leistungsabgabe der Generatoreinheit 20 und die Drehzahl des Motors und/oder der Zapfwelle 16 zu einem Regelkreis verknüpft, in dem eine Regelung dahingehend erfolgt, dass die Leistungsabgabe der Generatoreinheit 20 zumindest annähernd dem Leistungsbedarf des Anbaugeräts 30 entspricht.

Bezugszeichenliste

| | |
|---|---|
| 10 | landwirtschaftliches Arbeitsfahrzeug |
| 11 | Verbrennungskraftmaschine |
| 12 | Zugdeichsel |
| 14 | Dreipunktaufhängung |
| 16 | Zapfwelle |
| 18 | Gelenkwelle |
| 20 | Generatoreinheit |
| 22 | elektrischer Leiter |
| 24 | AEF-Verbinder |
| 30 | Anbaugerät |
| 32 | elektrischer Verbraucher |
| 34 | Achse |
| 40 | Steuereinheit |

**Patentansprüche**

1. Verfahren zum leistungsbedarfsabhängigen Betrieb einer an ein landwirtschaftliches Arbeitsfahrzeug (10) angebauten Generatoreinheit (20), bei dem eine Leistungsabgabe der Generatoreinheit (20) in Abhängigkeit eines ermittelten Leistungsbedarfs eines elektrischen und mit der Leistung der Generatoreinheit (20) gespeisten Verbrauchers (32) eines mit dem landwirtschaftlichen Arbeitsfahrzeug verbundenen Anbaugeräts (30) variiert wird, wobei die Leistungsabgabe der Generatoreinheit (20) durch Anpassen einer Eingangsdrehzahl der Generatoreinheit (20) variiert wird, **dadurch gekennzeichnet, dass** der Leistungsbedarf durch das Anbaugerät (30) ermittelt wird, und der ermittelte Leistungsbedarf des Anbaugeräts (30) als Leistungsanforderung zumindest mittelbar an die Generatoreinheit (20) übermittelt wird.

2. Verfahren nach Anspruch 1, **dadurch gekennzeichnet, dass** die Leistungsanforderung mittelbar über das landwirtschaftliche Arbeitsfahrzeug (10) an die Generatoreinheit (20) übermittelt wird.

3.  Verfahren nach einem der Ansprüche 1 bis 2, **dadurch gekennzeichnet, dass** die Generatoreinheit (20) in Abhängigkeit des Leistungsbedarfs des Anbaugeräts (30) eine Drehzahlanforderung an das landwirtschaftliche Arbeitsfahrzeug (10) übermittelt.

4.  Verfahren nach Anspruch 3, **dadurch gekennzeichnet, dass** das landwirtschaftliche Arbeitsfahrzeug (10) die Drehzahlanforderung in eine Anpassung der Motordrehzahl und/oder der Zapfwellendrehzahl umsetzt.

5.  Verfahren nach einem der Ansprüche 1 bis 4, **dadurch gekennzeichnet, dass** eine Steuereinheit (40) vorgesehen ist, die den Leistungsbedarf des Anbaugeräts (30), die Leistungsabgabe der Generatoreinheit (20) und die Drehzahl des Motors (11) und/oder der Zapfwelle (16) zu einem Regelkreis verknüpft, in dem eine Regelung dahingehend erfolgt, dass die Leistungsabgabe der Generatoreinheit (20) zumindest annähernd dem Leistungsbedarf des Anbaugeräts (30) entspricht.

## Claims

1.  Method for the power requirement-dependent operation of a generator unit (20) mounted on an agricultural work vehicle (10), in which method a power output of the generator unit (20) is varied as a function of a determined power requirement of an electrical consumer (32), which is fed with the power of the generator unit (20), of an attachment (30) which is connected to the agricultural work vehicle, wherein the power output of the generator unit (20) is varied by adapting an input rotational speed of the generator unit (20),
    **characterized in that** the power requirement by the attachment (30) is determined, and the determined power requirement of the attachment (30) is transmitted as a power demand at least indirectly to the generator unit (20).

2.  Method according to Claim 1, **characterized in that** the power demand is transmitted to the generator unit (20) indirectly via the agricultural work vehicle (10).

3.  Method according to either of Claims 1 and 2, **characterized in that** the generator unit (20) transmits a rotational speed request to the agricultural work vehicle (10) as a function of the power requirement of the attachment (30).

4.  Method according to Claim 3, **characterized in that** the agricultural work vehicle (10) converts the rotational speed request into an adaptation of the rotational speed of the engine and/or the rotational speed of the power takeoff shaft.

5.  Method according to one of Claims 1 to 4, **characterized in that** a control unit (40) is provided which links the power requirement of the attachment (30), the power output of the generator unit (20) and the rotational speed of the engine (11) and/or of the power takeoff shaft (16) to form a closed-loop control circuit in which closed-loop control is carried out in such a way that the power output of the generator unit (20) corresponds at least approximately to the power requirement of the attachment (30).

## Revendications

1.  Procédé permettant d'exploiter en fonction du besoin de puissance un ensemble générateur (20) installé sur un véhicule de travail agricole (10), dans lequel une puissance absorbée de l'ensemble générateur (20) varie en fonction d'un besoin de puissance déterminé d'un consommateur électrique (32), alimenté par la puissance de l'ensemble générateur (20), d'un outil porté (30) relié au véhicule de travail agricole, la puissance absorbée de l'ensemble générateur (20) étant amenée à varier par l'adaptation d'une vitesse de rotation d'entrée de l'ensemble générateur (20),
    **caractérisé en ce que** le besoin de puissance est déterminé par l'outil porté (30), et le besoin de puissance déterminé de l'outil porté (30) est transmis au moins indirectement à l'ensemble générateur (20) sous forme de demande de puissance.

2.  Procédé selon la revendication 1, **caractérisé en ce que** la demande de puissance est transmise à l'ensemble générateur (20) indirectement en passant par le véhicule de travail agricole (10).

3.  Procédé selon l'une quelconque des revendications 1 et 2, **caractérisé en ce que** l'ensemble générateur (20) transmet une demande de vitesse de rotation au véhicule de travail agricole (10) en fonction du besoin de puissance de l'outil porté (30).

4. Procédé selon la revendication 3, **caractérisé en ce que** le véhicule de travail agricole (10) convertit la demande de vitesse de rotation en une adaptation de la vitesse de rotation du moteur et/ou de la vitesse de rotation de l'arbre de prise de force.

5. Procédé selon l'une quelconque des revendications 1 à 4, **caractérisé en ce qu'**une unité de commande (40) est prévue qui connecte le besoin de puissance de l'outil porté (30), la puissance absorbée de l'ensemble générateur (20) et la vitesse de rotation du moteur (11) et/ou de l'arbre de prise de force (16) en circuit de régulation dans lequel une régulation est effectuée de sorte que la puissance absorbée de l'ensemble générateur (20) correspond au moins approximativement au besoin de puissance de l'outil porté (30).

FIG. 1

EP 3 105 076 B1

FIG. 2

Rotordrehzahl oder Zapfwellendrehzahl

Leistungsanforderung

[1/min]
[kW]

[t]

FIG. 3

**IN DER BESCHREIBUNG AUFGEFÜHRTE DOKUMENTE**

**In der Beschreibung aufgeführte Patentdokumente**

- DE 102012006731 A1
- DE 10303050B4
- DE 102009043591